# EUROPEAN PATENT APPLICATION

(11) **EP 4 023 438 A1**
(43) Date of publication of application: **06.07.2022**
(21) Application number: 20857308.9
(22) Date of filing: 16.07.2020
(51) Int. Cl.: B32B 27/20, B32B 27/30, B32B 27/36, C08L 27/12, C08L 27/18, C08L 67/00, C08L 67/03, C08K 3/013, C08G 63/06

(54) **LIQUID CRYSTAL POLYESTER RESIN COMPOSITION, LAMINATE, LIQUID CRYSTAL POLYESTER RESIN FILM, AND PRODUCTION METHOD THEREOF**

(30) Priority: 27.08.2019 JP 2019154578; 28.10.2019 JP 2019195018
(71) Applicant: Toray Industries, Inc., Tokyo, 103-8666 (JP)
(72) Inventor: KONISHI, Akito, Nagoya-shi, Aichi 455-8502 (JP); NAKAGAWA, Hiroshi, Nagoya-shi, Aichi 455-8502 (JP); UMETSU, Hideyuki, Nagoya-shi, Aichi 455-8502 (JP)
(74) Representative: Mewburn Ellis LLP
(86) International application number: PCT/JP2020/027654
(87) International publication number: WO 2021/039181

(57) **Abstract**

Disclosed is a liquid crystal polyester resin composition including a liquid crystal polyester resin (A), a solvent (B) in which the liquid crystal polyester resin (A) is dissolved, a fluorine resin (C) and an inorganic filler (D), wherein 100 to 5,000 parts by weight of the solvent (B), 5 to 300 parts by weight of the fluorine resin (C) and 1 to 300 parts by weight of the inorganic filler (D) are included relative to 100 parts by weight of the liquid crystal polyester resin (A). A liquid crystal polyester resin film in which occurrence of aggregates and deformation after a heat treatment are suppressed is obtained.

## Description

### [Technical Field]

The present invention relates to a liquid crystal polyester resin composition, a laminate, and a liquid crystal polyester resin film. More particularly, the present invention relates to a liquid crystal polyester resin composition, and a laminate and a liquid crystal polyester resin film obtained by using the same.

### [Background Art]

The liquid crystal polyester resin has a liquid crystal structure and is therefore excellent in heat resistance, fluidity and dimensional stability. For this reason, demand is increasing mainly for applications of electric/electronic components that are required to have those properties. In particular, with the recent improvement in performance of devices, the above components are becoming smaller and thinner. Of these, a laminate obtained by laminating a liquid crystal polyester resin film with a metal foil and the like is used for mobile terminals represented by smartphones and in-vehicle boards and the like, and its demand is greatly increasing in association with a recent increase in demand for high frequency band applications.

The laminate obtained by laminating a liquid crystal polyester resin film with a metal foil and the like may be deformed (e.g., the laminate may be wrapped) due to a difference in the linear expansion coefficient between the liquid crystal polyester resin and the metal. Meanwhile, examples of the method for producing the liquid crystal polyester resin film include a solution film-forming method in which a solvent is removed after applying a solution containing a liquid crystal polyester resin. In order to suppress the deformation of the laminate, there has been proposed addition of various inorganic fillers to a solution containing a liquid crystal polyester resin to make the liquid crystal polyester resin film have a low linear expansion coefficient, which is closer to the linear expansion coefficient of a metal (for example, Patent Literatures 1 to 5). As an example of addition of those other than inorganic fillers to a solution containing a liquid crystal polyester resin, there has been proposed addition of a small amount of a leveling agent to reduce the surface defects after drying at high temperature (for example, Patent Literature 6).

### [Citation List]

### [Patent Literature]

[Patent Literature 1]
   JP 2010-31256 A
[Patent Literature 2]
   JP 2013-203831 A
[Patent Literature 3]
   JP 2012-149123 A
[Patent Literature 4]
   JP 2005-314523 A
[Patent Literature 5]
   JP 2019-52288 A
[Patent Literature 6]
   JP 2012-149127 A

### [Summary of Invention]

### [Technical Problem]

In the methods mentioned in Patent Literatures 1 to 6, although the liquid crystal polyester resin film becomes to have a low linear expansion coefficient, there was a problem that the dispersibility of the inorganic filler in the solution deteriorates over time, causing aggregates in the resultant film. There was also a problem that, when the resultant film is subjected to a heat treatment, deformation such as wrinkles occurs.

An object of the present invention is to provide a liquid crystal polyester resin composition that suppresses occurrence of aggregates in and deformation after a heat treatment of the resultant film, a liquid crystal polyester resin film obtained therefrom, and a method for producing a laminate using the resin composition.

### [Means for Solving the Problems]

As a result of an intensive study to solve the above problems, the present inventors have found that it is possible to suppress occurrence of aggregates in and deformation after a heat treatment of the resultant film by containing a fluorine resin and an inorganic filler in a liquid crystal polyester resin and a solvent in which the liquid crystal polyester resin is dissolved, and thus the present invention has been completed.

Namely, the present invention is as follows.
(1) A liquid crystal polyester resin composition including a liquid crystal polyester resin (A), a solvent (B) in which the liquid crystal polyester resin (A) is dissolved, a fluorine resin (C) and an inorganic filler (D), wherein 100 to 5,000 parts by weight of the solvent (B), 5 to 300 parts by weight of the fluorine resin (C) and 1 to 300 parts by weight of the inorganic filler (D) are included relative to 100 parts by weight of the liquid crystal polyester resin (A) .
(2) A liquid crystal polyester resin film obtained from the above liquid crystal polyester resin composition.
(3) A laminate comprising a support and a resin layer that are mutually laminated, wherein the support is laminated on at least one surface of the resin layer obtained from the above liquid crystal polyester resin composition.
(4) A method for producing a laminate, which includes applying the above liquid crystal polyester resin composition onto a support and removing the solvent.
(5) A method for producing a liquid crystal polyester resin film, which includes removing the support from the laminate obtained by the above method to obtain a liquid crystal polyester resin film.

### [Advantageous Effects of the Invention]

The liquid crystal polyester resin composition of the present invention can suppress occurrence of aggregates in and deformation after a heat treatment of the resultant film. Such a film can be suitably used for a laminate used for flexible printed wiring boards and semiconductor packages in electric/electronic components and mechanical components.

### [Description of Embodiments]

The present invention will be described in detail below.

### <Liquid Crystal Polyester Resin (A)>

The liquid crystal polyester resin (A) is a polyester that forms an anisotropic molten phase. Examples of such a polyester resin include polyesters composed of structural units selected to form an anisotropic molten phase from an oxycarbonyl unit, a dioxy unit, a dicarbonyl unit and the like, which will be mentioned later.

The structural units constituting the liquid crystal polyester resin (A) will be described below.

Specific examples of the oxycarbonyl unit include structural units derived from aromatic hydroxycarboxylic acids such as p-hydroxybenzoic acid, m-hydroxybenzoic acid and 6-hydroxy-2-naphthoic acid. From the viewpoint of suppressing deformation after a heat treatment by improving the strength of the resultant film, the oxycarbonyl unit is preferably a structural unit derived from an aromatic hydroxycarboxylic acid, more preferably a structural unit derived from p-hydroxybenzoic acid or 6-hydroxy-2-naphthoic acid, and still more preferably a structural unit derived from p-hydroxybenzoic acid.

Specific examples of the dioxy unit include structural units derived from aromatic diols such as 4,4'-dihydroxybiphenyl, hydroquinone, resorcinol, t-butylhydroquinone, phenylhydroquinone, chlorohydroquinone, 2,6-dihydroxynaphthalene, 2,7-dihydroxynaphthalene, 3,4'-dihydroxybiphenyl, 2,2-bis(4-hydroxyphenyl) propane, 4,4'-dihydroxydiphenyl ether, 4,4'-dihydroxydiphenylsulfone, 4,4'-dihydroxydiphenylsulfide and 4,4'-dihydroxybenzophenone; structural units derived from aliphatic diols such as ethylene glycol, propylene glycol, 1,4-butanediol, 1,6-hexanediol and neopentyl glycol; structural units derived from alicyclic diols such as 1,4-cyclohexanediol and 1,4-cyclohexanedimethanol; and the like. From the viewpoint of suppressing deformation after a heat treatment by improving the strength of the resultant film, the dioxy unit is preferably a structural unit derived from ethylene glycol, 4,4'-dihydroxybiphenyl or hydroquinone, and more preferably a structural unit derived from ethylene glycol or 4,4'-dihydroxybiphenyl. Further, from the viewpoint of having excellent solubility, a structural unit derived from ethylene glycol is particularly preferable.

Specific examples of the dicarbonyl unit include structural units derived from aromatic dicarboxylic acids such as terephthalic acid, isophthalic acid, 2,6-naphthalenedicarboxylic acid, 4,4'-diphenyldicarboxylic acid, 3,3'-diphenyldicarboxylic acid, 2,2'-diphenyldicarboxylic acid, 1,2-bis(phenoxy) ethane-4,4'-dicarboxylic acid, 1,2-bis(2-chlorophenoxy) ethane-4,4'-dicarboxylic acid and 4,4'-diphenyl ether dicarboxylic acid; structural units derived from aliphatic dicarboxylic acids such as adipic acid, azelaic acid, sebacic acid, dodecanedioic acid and hexahydroterephthalic acid; structural units derived from alicyclic dicarboxylic acids such as 1,4-cyclohexanedicarboxylic acid and 1,3-cyclohexanedicarboxylic acid; and the like. From the viewpoint of suppressing deformation after a heat treatment by improving the strength of the resultant film, the dicarbonyl unit is preferably a structural unit derived from an aromatic dicarboxylic acid, particularly preferably a structural unit derived from terephthalic acid or isophthalic acid, and more preferably a unit derived from terephthalic acid.

The liquid crystal polyester resin can include structural units derived from p-aminobenzoic acid, p-aminophenol and the like, in addition to the above structural units, as long as the liquid crystallinity and properties are not impaired.

The monomer as a raw material constituting each of the above structural units is not particularly limited as long as it has a structure capable of forming each structural unit. It is possible to use an acylated product of a hydroxyl group of such a monomer, a carboxylic acid derivative such as an esterified product, an acid halide and an acid anhydride of a carboxyl group and the like.

From the viewpoint of exhibiting the liquid crystallinity and suppressing deformation after a heat treatment by improving the strength of the resultant film, the liquid crystal polyester resin (A) includes preferably 15 mol% or more, more preferably 30 mol% or more, and still more preferably 40 mol% or more of a structural unit derived from an aromatic hydroxycarboxylic acid, relative to 100 mol% of the total structural unit of the liquid crystal polyester resin. Meanwhile, from the viewpoint of suppressing the formation of infusible substances and suppressing deformation after a heat treatment by improving the strength of the resultant film, the liquid crystal polyester resin includes preferably 80 mol% or less, more preferably 75 mol% or less, and still more preferably 70 mol% or less of a structural unit derived from an aromatic hydroxycarboxylic acid.

From the viewpoint of exhibiting the liquid crystallinity and suppressing deformation after a heat treatment by improving the strength of the resultant film, the liquid crystal polyester resin (A) includes preferably 3 mol% or more, more preferably 4 mol% or more, and still more preferably 5 mol% or more of a structural unit derived from an aromatic diol, relative to 100 mol% of the total structural unit of the liquid crystal polyester resin (A). Meanwhile, from the viewpoint of suppressing deformation after a heat treatment by improving the strength of the resultant film, the liquid crystal polyester resin (A) includes preferably 20 mol% or less, more preferably 15 mol% or less, and still more preferably 10 mol% or less of a structural unit derived from an aromatic diol.

From the viewpoint of exhibiting the liquid crystallinity and suppressing deformation after a heat treatment by improving the strength of the resultant film, the liquid crystal polyester resin (A) includes preferably 7 mol% or more, more preferably 10 mol% or more, and still more preferably 12 mol% or more of a structural unit derived from an aromatic dicarboxylic acid, relative to 100 mol% of the total structural unit of the liquid crystal polyester resin (A). Meanwhile, from the viewpoint of suppressing deformation after a heat treatment by improving the strength of the resultant film, the liquid crystal polyester resin (A) includes preferably 40 mol% or less, more preferably 35 mol% or less, and still more preferably 30 mol% or less of a structural unit derived from an aromatic dicarboxylic acid.

From the viewpoint of being capable of improving the dispersibility of a fluorine resin (C) and an inorganic filler (D) mentioned below in a solution because of excellent solubility in a solvent (B) mentioned below, and thus being capable of suppressing occurrence of aggregates in and deformation after a heat treatment of the resultant film, the liquid crystal polyester resin (A) includes preferably 3 mol% or more, more preferably 5 mol% or more, and still more preferably 7 mol% or more of a structural unit derived from an aliphatic diol having 2 to 4 carbon atoms, relative to 100 mol% of the total structural unit of the liquid crystal polyester resin (A). Meanwhile, from the viewpoint of exhibiting the liquid crystallinity and suppressing deformation after a heat treatment by improving the strength of the resultant film, the liquid crystal polyester resin (A) includes preferably 40 mol% or less, more preferably 35 mol% or less, and still more preferably 30 mol% or less of a structural unit derived from an aliphatic diol having 2 to 4 carbon atoms.

In the liquid crystal polyester resin (A), from the viewpoint of suppressing deformation after a heat treatment by improving the strength of the resultant film, the total of a structural unit derived from an aromatic hydroxycarboxylic acid and a structural unit derived from an aromatic dicarboxylic acid is preferably 60 mol% or more, more preferably 65 mol% or more, and still more preferably 68 mol% or more, relative to 100 mol% of the total structural unit of liquid crystal polyester resin (A). Meanwhile, the upper limit of the total of a structural unit derived from an aromatic hydroxycarboxylic acid and a structural unit derived from an aromatic dicarboxylic acid is 100 mol%, but is preferably 90 mol% or less, and more preferably 85 mol% or less, from the viewpoint of having excellent solubility and being capable of improving the dispersibility of a fluorine resin (C) and an inorganic filler (D) mentioned below in a solution by controlling the crystallinity of the liquid crystal polyester resin, and thus being capable of suppressing occurrence of aggregates in and deformation after a heat treatment of the resultant film. Regarding the structural unit derived from an aromatic hydroxycarboxylic acid and the structural unit derived from an aromatic dicarboxylic acid, the liquid crystal polyester resin may have either one structural unit of the above structural units and the content of the other structural unit may be 0 mol%, but the content of each of the structural units preferably exceeds 0 mol%.

The calculation method of the content of each structural unit of the liquid crystal polyester resin (A) is shown below. First, the liquid crystal polyester resin is weighed in a nuclear magnetic resonance (NMR) sample tube and dissolved in a solvent in which the liquid crystal polyester resin is soluble (for example, pentafluorophenol/deuterated tetrachloroethane-d₂ mixed solvent). Then, the solution thus obtained is subjected to ¹H-NMR spectrum measurement and the content of each structural unit can be calculated from a ratio of peak areas derived from the respective structural units.

From the viewpoint of excellent heat resistance and suppressing deformation after a heat treatment by improving the strength of the resultant film, the melting point (Tm) of the liquid crystal polyester resin (A) is preferably 200°C or higher, more preferably 230°C or higher, and still more preferably 260°C or higher. Meanwhile, from the viewpoint of being capable of improving the dispersibility of a fluorine resin (C) and an inorganic filler (D) mentioned below in a solution because of excellent solubility, and thus being capable of suppressing occurrence of aggregates in and deformation after a heat treatment of the resultant film, the melting point (Tm) of the liquid crystal polyester resin is preferably 360°C or lower, more preferably 340°C or lower, and still more preferably 320°C or lower.

The melting point (Tm) is measured by differential scanning calorimetry. Specifically, first, the endothermic peak temperature (Tm₁) is observed by heating a polymer after completion of polymerization under temperature rising conditions of 20°C/minute from room temperature. After observing the endothermic peak temperature (Tm₁), the polymer is maintained at the temperature of the endothermic peak temperature (Tm₁) + 20°C for 5 minutes. The polymer is then cooled to room temperature under temperature falling conditions of 20°C/minute. Then, the endothermic peak temperature (Tm₂) is observed by heating the polymer again under temperature rising conditions of 20°C/minute. The melting point (Tm) in the present invention means the endothermic peak temperature (Tm₂) observed in the second temperature rising process.

The melt viscosity of the liquid crystal polyester resin (A) is preferably 1 Pa·s or more, more preferably 3 Pa·s or more, and still more preferably 5 Pa·s or more, from the viewpoint of suppressing deformation after a heat treatment by improving the strength of the resultant film. Meanwhile, the melt viscosity of the liquid crystal polyester resin is preferably 35 Pa·s or less, preferably 20 Pa·s or less, and still more preferably 10 Pa·s or less, from the viewpoint of being capable of improving the dispersibility of a fluorine resin (C) and an inorganic filler (D) mentioned below in a solution because of excellent solubility, and thus being capable of suppressing occurrence of aggregates in and deformation after a heat treatment of the resultant film.

This melt viscosity is the value measured by an Koka-type flow tester under conditions of a temperature of the melting point (Tm) of the liquid crystal polyester resin (A) + 10°C, or 280°C when the melting point of the liquid crystal polyester resin (A) is 270°C or lower, and a shear rate of 1,000/second.

### <Method for Producing Liquid Crystal Polyester Resin (A)>

The method for producing a liquid crystal polyester resin (A) used in the present invention is not particularly limited, and the liquid crystal polyester resin can be produced according to a known polycondensation method of a polyester. Specifically, using a liquid crystal polyester resin composed of a structural unit derived from p-hydroxybenzoic acid, a structural unit derived from 4,4'-dihydroxybiphenyl, a structural unit derived from terephthalic acid and a structural unit derived from ethylene glycol as an example, the following methods can be exemplified.
(1) A method in which a liquid crystal polyester resin is produced by acetic acid-eliminating polycondensation reaction from p-acetoxybenzoic acid, 4,4'-diacetoxybiphenyl and terephthalic acid, and a polymer or an oligomer of polyethylene terephthalate, or bis(β-hydroxyethyl)terephthalate.
(2) A method in which p-hydroxybenzoic acid, 4,4'-diahydroxybiphenyl and terephthalic acid, and a polymer or an oligomer of a polyester such as polyethylene terephthalate, or bis(β-hydroxyethyl)terephthalate are reacted with acetic anhydride to thereby acetylate a phenolic hydroxyl group, and then a liquid crystal polyester resin is produced by an acetic acid-eliminating polycondensation reaction.
(3) A method in which 1,2-bis(4-hydroxybenzoyl)ethane is used as a part of starting materials in the production method (1) or (2) as mentioned in JP 3-59024 A.

Of these, the method (2) is preferably used because it is industrially excellent in controlling the degree of polymerization of the liquid crystal polyester resin (A).

As the method for producing a liquid crystal polyester resin (A) used in the present invention, it is also possible to complete the polycondensation reaction by a solid phase polymerization method. Examples of the treatment by the solid phase polymerization method include the following method. First, a polymer or an oligomer of the liquid crystal polyester resin is pulverized by a pulverizer. The reaction is completed by heating the pulverized polymer or oligomer under a nitrogen stream or under reduced pressure and polycondensing to the desired degree of polymerization. The heating is preferably performed at a temperature within a range of the melting point -50°C to the melting point -5°C (for example, 200 to 300°C) of the liquid crystal polyester for 1 to 50 hours.

The polycondensation reaction of the liquid crystal polyester resin (A) proceeds in the absence of a catalyst, and it is also possible to use, as the catalyst, stannous acetate, tetrabutyl titanate, potassium acetate and sodium acetate, antimony trioxide, metallic magnesium and the like.

### <Solvent (B) in Which Liquid Crystal Polyester Resin (A) is Dissolved>

The liquid crystal polyester resin composition of the present invention includes a liquid crystal polyester resin (A) and a solvent (B) in which the liquid crystal polyester resin (A) is dissolved (hereinafter sometimes referred to as solvent (B)).

The solvent (B) as used herein refers to a solvent in which 1% by weight or more of the liquid crystal polyester resin (A) can be dissolved.

The liquid crystal polyester resin composition as used herein may be in any of a state where a part of the liquid crystal polyester resin (A) remains without being dissolved although 1% by weight or more of the liquid crystal polyester resin (A) is dissolved, a state where the liquid crystal polyester resin (A) is completely dissolved and liquefied, and a state where the liquid crystal polyester resin is dissolved and then the thus obtained solution is solidified by cooling.

The method for producing such a liquid crystal polyester resin composition will be described. The solvent (B) is not particularly limited as long as it can dissolve 1% by weight or more of the liquid crystal polyester resin, and examples thereof include halogenated phenols, halogenated alcohol, and mixed solvents of the above solvents and other organic solvents.

The liquid crystal polyester resin composition of the present invention includes 100 to 5,000 parts by weight of the solvent (B) relative to 100 parts by weight of the liquid crystal polyester resin (A). If the content of the solvent (B) is less than 100 parts by weight, the liquid crystal polyester resin (A) is not dissolved even when heating. From the viewpoint of being capable of improving the dispersibility of a fluorine resin (C) and an inorganic filler (D) mentioned below in a solution because of excellent solubility, and thus being capable of suppressing occurrence of aggregates in and deformation after a heat treatment of the resultant film, the content of the solvent (B) is preferably 150 parts by weight or more, more preferably 200 parts by weight or more, still more preferably 400 parts by weight or more, and particularly preferably 500 parts by weight or more. Meanwhile, if the content of the solvent (B) is more than 5,000 parts by weight, the viscosity of the solution becomes excessively low, and the dispersibility of a fluorine resin (C) and an inorganic filler (D) mentioned below in the solution deteriorates, resulting in occurrence of aggregates in and deformation after a heat treatment of the resultant film. From the viewpoint of being capable of improving the dispersibility of a fluorine resin (C) and an inorganic filler (D) mentioned below in a solution because of having a moderate viscosity, and thus being capable of suppressing occurrence of aggregates in and deformation after a heat treatment of the resultant film, the content of the solvent (B) is preferably 4,000 parts by weight or less, more preferably 3,000 parts by weight or less, and still more preferably 2,000 parts by weight or less.

From the viewpoint of being capable of improving the dispersibility of a fluorine resin (C) and an inorganic filler (D) mentioned below in a solution because of excellent solubility, and thus being capable of suppressing occurrence of aggregates in and deformation after a heat treatment of the resultant film, it is preferable that the liquid crystal polyester resin composition of the present invention includes 50 parts by weight or more of a phenol (B1) in which three or more hydrogen atoms bonded to the benzene ring are substituted with fluorine atoms (hereinafter sometimes referred to as solvent (B1)) relative to 100 parts by weight of the liquid crystal polyester resin. The solvent (B1) is a solvent having excellent solubility of the liquid crystal polyester resin. From the viewpoint of being capable of improving the dispersibility of a fluorine resin (C) and an inorganic filler (D) mentioned below in a solution because of excellent solubility, and thus being capable of suppressing occurrence of aggregates in and deformation after a heat treatment of the resultant film, the content of the solvent (B1) is preferably 100 parts by weight or more, more preferably 150 parts by weight or more, still more preferably 200 parts by weight or more, and particularly preferably 450 parts by weight or more. From the viewpoint of being capable of improving the dispersibility of a fluorine resin (C) and an inorganic filler (D) mentioned below in a solution due to appropriate solution concentration, and thus being capable of suppressing occurrence of aggregates in and deformation after a heat treatment of the resultant film, it is preferable that the liquid crystal polyester resin composition includes 3,000 weight or less of the solvent (B1) relative to 100 parts by weight of the liquid crystal polyester resin. The content of the solvent (B1) is more preferably 2,500 parts by weight or less, still more preferably 2,000 parts by weight or less, and particularly preferably 1,500 parts by weight or less.

Specific examples of the solvent (B1) include 3,4,5-trifluorophenol, 2,4,6-trifluorophenol, 2,3,4-trifluorophenol, 2,3,5,6-tetrafluorophenol, 2,3,4,5-tetrafluorophenol and pentafluorophenol, and pentafluorophenol is particularly preferable from the viewpoint of excellent solubility.

Although such a solvent (B1) has excellent solubility, it has a melting point higher than 30°C and is solid at room temperature, so that it is necessary to heat the solution to a high temperature during film formation. It is preferable that the liquid crystal polyester resin composition of the present invention further includes a protic solvent (B2) having a melting point of 30°C or lower (hereinafter sometimes referred to as solvent (B2)) from the viewpoint of being capable of improving the dispersibility of a fluorine resin (C) and an inorganic filler (D) mentioned below in a solution by liquefying at a lower temperature, and thus being capable of suppressing occurrence of aggregates in and deformation after a heat treatment of the resultant film. From the viewpoint of being capable of liquefying at a lower temperature and being capable of improving the dispersibility of a fluorine resin (C) and an inorganic filler (D) mentioned below in a solution, and thus being capable of suppressing occurrence of aggregates in and deformation after a heat treatment of the resultant film, the melting point of the solvent (B2) is preferably 20°C or lower, more preferably 10°C or lower, and still more preferably 0°C or lower. The lower limit of the melting point of the solvent (B2) is not particularly limited.

From the viewpoint of suppressing the decomposition of the liquid crystal polyester resin (A) and suppressing deformation after a heat treatment by improving the strength of the resultant film, the solvent (B2) preferably has an acid dissociation constant (pKa) of 4 to 12. The lower the pKa of the solvent (B2), the more the solubility of the liquid crystal polyester resin is improved, thus making it possible to improve the dispersibility of a fluorine resin (C) and an inorganic filler (D) mentioned below in a solution, and thus it is possible to suppress occurrence of aggregates in and deformation after a heat treatment of the resultant film. Therefore, the pKa is preferably 12 or less, more preferably 11 or less, and still more preferably 10 or less. Meanwhile, if the pKa of the solvent (B2) is too low, the decomposition of the liquid crystal polyester resin may be promoted. Therefore, the pKa is preferably 4 or more, more preferably 4.5 or more, and still more preferably 5 or more. The acid dissociation constant (pKa) is the numerical value in water at 25°C and can be calculated by the method mentioned in *KagakuBinran Kisohen* (Handbook of Chemistry: Fundamentals Section) Revised 5th edition 11-331 to 11-343 (edited by the Chemical Society of Japan, published by Maruzen Co., Ltd.).

From the viewpoint of being capable of liquefying the resin composition at a lower temperature and being capable of improving the dispersibility of a fluorine resin (C) and an inorganic filler (D) mentioned below in a solution, and thus being capable of suppressing occurrence of aggregates in and deformation after a heat treatment of the resultant film, the content of the solvent (B2) is preferably 1 part by weight or more, more preferably 10 parts by weight or more, still more preferably 50 parts by weight or more, and particularly preferably 100 parts by weight or more, relative to 100 parts by weight of the liquid crystal polyester resin. From the viewpoint of being capable of improving the dispersibility of a fluorine resin (C) and an inorganic filler (D) mentioned below in a solution due to appropriate solution concentration, and thus being capable of suppressing occurrence of aggregates in and deformation after a heat treatment of the resultant film, the content of the solvent (B2) is preferably 1,500 parts by weight or less, more preferably 1,200 parts by weight or less, and still more preferably 1,000 parts by weight or less, relative to 100 parts by weight of the liquid crystal polyester resin.

The solvent (B2) may be any protic solvent that satisfies the above melting point and pKa range, and is preferably phenols or alcohols, from the viewpoint of suppressing the decomposition of the liquid crystal polyester resin and having excellent solubility, and being capable of improving the dispersibility of a fluorine resin (C) and an inorganic filler (D) mentioned below in a solution, and thus being capable of suppressing occurrence of aggregates in and deformation after a heat treatment of the resultant film. Examples of alcohols satisfying the above melting point and pKa range include fluoroalcohols in which at least a part of hydrogen atoms are substituted with fluorine atoms, and hexafluoroisopropanol is preferable. Examples of phenols satisfying the above melting point and pKa range include compounds in which at least a part of hydrogen atoms on the benzene ring are substituted with alkyl groups, halogen groups, trifluoromethyl groups and the like. Of these, preferred are compounds in which at least a part of hydrogen atoms on the benzene ring are substituted with halogen groups or trifluoromethyl groups. Specific examples of such compounds include o-fluorophenol, m-fluorophenol, o-chlorophenol, o-bromophenol, 4-chloro-2-fluorophenol, 2-chloro-4-fluorophenol, 3,5-bis(trifluoromethyl)phenol and the like.

The boiling point of the solvent (B2) is preferably 200°C or lower, and more preferably 180°C or lower, from the viewpoint of being capable of removing the solvent (B2) at a low temperature during film formation and being capable of suppressing occurrence of aggregates in and deformation after a heat treatment of the resultant film. The boiling point of the solvent (B2) is preferably 40°C or higher, more preferably 60°C or higher, and still more preferably 80°C or higher, from the viewpoint of being capable of suppressing occurrence of aggregates in and deformation after a heat treatment of the resultant film because the solvent does not easily volatilize during film formation.

The mixing ratio of the solvent (B1) and the solvent (B2) is not particularly limited as long as it is a mixing ratio that enables dissolution of the liquid crystal polyester resin (A). From the viewpoint of having excellent solubility and being capable of improving the dispersibility of a fluorine resin (C) and an inorganic filler (D) mentioned below in a solution, and thus being capable of suppressing occurrence of aggregates in and deformation after a heat treatment of the resultant film, the content of the solvent (B1) is preferably 35% by weight or more, more preferably 45% by weight or more, and still more preferably 50% by weight or more, when the total amount of the solvent (B1) and the solvent (B2) is 100% by weight. Meanwhile, from the viewpoint of being capable of easily liquefying the resin composition at a lower temperature and being capable of improving the dispersibility of a fluorine resin (C) and an inorganic filler (D) mentioned below in a solution, and thus being capable of suppressing occurrence of aggregates in and deformation after a heat treatment of the resultant film, the content of the solvent (B1) is preferably 99% by weight or less, more preferably 95% by weight or less, and still more preferably 90% by weight or less.

The method for dissolving the liquid crystal polyester resin (A) in a solvent includes a method for dissolving the liquid crystal polyester resin (A) in the solvent (B1) first, followed by addition of the solvent (B2), and a method for dissolving the liquid crystal polyester resin (A) in a mixed solvent of the solvent (B1) and the solvent (B2), and the method may be either of them.

The liquid crystal polyester resin composition of the present invention is preferably liquid at the temperature of 100°C or lower, more preferably 80°C or lower, still more preferably 50°C or lower, and particularly preferably 30°C or lower, from the viewpoint of being capable of improving the dispersibility of a fluorine resin (C) and an inorganic filler (D) mentioned below in a solution, and thus being capable of suppressing occurrence of aggregates in and deformation after a heat treatment of the resultant film. The liquid as used herein means a liquid which flows within 10 seconds when the container containing the liquid crystal polyester resin composition of the present invention is tilted by 90 degrees.

The solvents other than the solvent (B1) and the solvent (B2) may be added as long as the solubility of the liquid crystal polyester resin is not impaired. The liquid crystal polyester resin composition may be filtered through a filter as necessary to remove fine foreign substances contained in the composition.

### <Fluorine Resin (C) and Inorganic Filler (D)>

The liquid crystal polyester resin composition of the present invention includes a fluorine resin (C) and an inorganic filler (D). Inclusion of the fluorine resin (C) makes it possible to improve the dispersibility of the inorganic filler (D), and thus it is possible to suppress occurrence of aggregates in and deformation after a heat treatment of the resultant film.

Examples of the fluorine resin (C) include polytetrafluoroethylene (PTFE), an ethylene-tetrafluoroethylene copolymer (ETFE), a tetrafluoroethylene-perfluoro(alkylvinyl ether)copolymer (PFA), a tetrafluoroethylene-hexafluoropropylene copolymer (FEP), an ethylene-tetrafluoroethylene-hexafluoropropylene copolymer, polyvinylidene difluoride (PVDF), polychlorotrifluoroethylene (PCTFE) and the like. PTFE is preferable from the viewpoint that the solvent (B) in which the liquid crystal polyester resin (A) is dissolved is not absorbed and that the solution viscosity does not become excessively high, and thus of having excellent dispersibility in the solvent (B) and being capable of improving the dispersibility of the inorganic filler (D), and thus being capable of suppressing occurrence of aggregates in and deformation after a heat treatment of the resultant film.

In the liquid crystal polyester resin composition of the present invention, the content of the fluorine resin (C) is 5 to 300 parts by weight relative to 100 parts by weight of the liquid crystal polyester resin (A). If the content of the fluorine resin (C) is less than 5 parts by weight, it is not possible to improve the dispersibility of the inorganic filler (D), resulting in occurrence of aggregates in and deformation after a heat treatment of the resultant film. From the viewpoint of being capable of improving the dispersibility of the inorganic filler (D), and thus being capable of suppressing occurrence of aggregates in and deformation after a heat treatment of the resultant film, the content of the fluorine resin (C) is preferably 10 parts by weight or more, more preferably 30 parts by weight or more, and still more preferably 50 parts by weight or more. Meanwhile, if the content of the fluorine resin (C) is more than 300 parts by weight, the fluorine resins (C) aggregate with each other and the linear expansion coefficient of the resultant film becomes higher, resulting in occurrence of aggregates in and deformation after a heat treatment of the resultant film. From the viewpoint of being capable of improving the dispersibility of the inorganic filler (D), and thus being capable of suppressing occurrence of aggregates in and deformation after a heat treatment of the resultant film, the content is preferably 270 parts by weight or less, more preferably 250 parts by weight or less, and still more preferably 230 parts by weight or less.

It is preferable that the fluorine resin (C) is powdery or granular from the viewpoint of the dispersibility of the fluorine resin (C). The mean particle size of the fluorine resin (C) is preferably 0.1 µm or more, and more preferably 0.5 µm or more, from the viewpoint of being capable of improving the dispersibility by using in combination with the inorganic filler (D), and thus being capable of suppressing occurrence of aggregates in and deformation after a heat treatment of the resultant film. Meanwhile, the mean particle size of the fluorine resin (C) is preferably 20 µm or less, more preferably 15 µm or less, and still more preferably 10 µm or less, from the viewpoint of being capable of improving the dispersibility by using in combination with the inorganic filler (D), and thus being capable of suppressing occurrence of aggregates in and deformation after a heat treatment of the resultant film. The mean particle size as used herein means a volume mean particle size. The mean particle size of the fluorine resin (C) can be measured by weighing 100 mg of the fluorine resin (C), and dispersing it in water, followed by measurement using a laser diffraction/scattering particle size distribution analyzer ("LA-300" manufactured by HORIBA, Ltd.).

Examples of the inorganic filler (D) include fibrous inorganic fillers, whisker-like inorganic fillers, plate-like inorganic fillers, powdery inorganic fillers, granular inorganic fillers and the like. Specific examples of fibrous inorganic fillers or whisker-like inorganic fillers include glass fibers; metal fibers such as stainless steel fibers, aluminum fibers and brass fibers; gypsum fibers, ceramic fibers, asbestos fibers, zirconia fibers, alumina fibers, silica fibers, titanium oxide fibers, potassium titanate whiskers, barium titanate whiskers, aluminum borate whiskers, silicon nitride whiskers and acicular titanium oxides. Examples of plate-like inorganic fillers include mica, talc, kaolin, glass flakes, clay, molybdenum disulfide, boron nitride and wollastonite. Examples of powdery or granular inorganic fillers include titanium oxide, magnesium carbonate, magnesium hydroxide, magnesium oxide, zinc oxide, zinc sulfide, barium sulfate, barium titanate, barium phosphate, aluminum oxide, lead carbonate, calcium carbonate, glass beads, glass balloons, magnesium nitride, magnesium boron nitride, aluminum nitride, zirconium oxide, zirconium phosphate, zirconium phosphate tungstate and the like. Examples of powdery or granular inorganic fillers also include silica. The silica may be in any form such as dry silica, wet silica, colloidal silica and mesoporous silica. The above fibrous fillers or whisker-like fillers may be pulverized to make powdery or granular fillers. Of these, plate-like inorganic fillers are preferred as the inorganic fillers (D), from the viewpoint of being capable of suppressing occurrence of aggregates in and deformation after a heat treatment of the resultant film.

From the viewpoint of improving the dispersibility by mixing with the fluorine resin (C), and thus being capable of suppressing occurrence of aggregates in and deformation after a heat treatment of the resultant film, the inorganic filler (D) is preferably a compound containing nitrogen such as silicon nitride, boron nitride, magnesium nitride, magnesium boron nitride and aluminum nitride, and particularly metallic nitride. Compounds containing boron such as aluminum borate, boron nitride and magnesium boron nitride are also preferable. Of these, plate-like boron nitride is preferable.

The surface of the above inorganic fillers used in the present invention may be treated with a known coupling agent (for example, a silane-based coupling agent, a titanate-based coupling agent, etc.) and other surface treatment agents. Two or more kinds of the above inorganic fillers used in the present invention may be used in combination.

In the liquid crystal polyester resin composition of the present invention, the content of the inorganic filler (D) is 1 to 300 parts by weight relative to 100 parts by weight of the liquid crystal polyester resin (A). If the content of the inorganic filler (D) is less than 1 part by weight, deformation occurs after a heat treatment, and in addition, the fluorine resins (C) aggregate, resulting in occurrence of aggregates in the film. From the viewpoint of being capable of suppressing deformation after a heat treatment, and in addition, being capable of improving the dispersibility by using in combination with the fluorine resin (C), and thus being capable of suppressing occurrence of aggregates in the resultant film, the content of the inorganic filler (D) is preferably 10 parts by weight or more, more preferably 30 parts by weight or more, and still more preferably 50 parts by weight or more. Meanwhile, if the content of the inorganic filler (D) is more than 300 parts by weight, the inorganic fillers (D) aggregate with each other, resulting in occurrence of aggregates in and deformation after a heat treatment of the resultant film. From the viewpoint of being capable of improving the dispersibility by using in combination with the fluorine resin (C), and thus being capable of suppressing occurrence of aggregates in and deformation after a heat treatment of the resultant film, the content of the inorganic filler (D) is preferably 270 parts by weight or less, more preferably 250 parts by weight or less, and still more preferably 230 parts by weight or less.

The mean particle size of the inorganic filler (D) is preferably 0.1 µm or more, and more preferably 0.3 µm or more, from the viewpoint of being capable of suppressing occurrence of aggregates in the resultant film, and in addition, being capable of suppressing deformation after a heat treatment by improving the strength of the resultant film. Meanwhile, the mean particle size of the inorganic filler (D) is preferably 20 µm or less, more preferably 10 µm or less, and still more preferably 5 µm or less, from the viewpoint of being capable of suppressing the aggregation of the fluorine resins (C), and thus being capable of suppressing occurrence of aggregates in and deformation after a heat treatment of the resultant film.

The mean particle size as used herein means a volume mean particle size. The mean particle size of the inorganic filler (D) can be measured by weighing 100 mg of the inorganic filler (D), and dispersing it in water, followed by measurement using a laser diffraction/scattering particle size distribution analyzer ("LA-300" manufactured by HORIBA, Ltd.).

The weight ratio (C/D) of the fluorine resin (C) to the inorganic filler (D) is preferably 0.1 or more, more preferably 0.5 or more, and still more preferably 1 or more, from the viewpoint of being capable of improving the dispersibility of the fluorine resin (C) and the inorganic filler (D) in a solution, and thus being capable of suppressing occurrence of aggregates in and deformation after a heat treatment of the resultant film. Meanwhile, the C/D is preferably 10 or less, more preferably 7 or less, and still more preferably 5 or less, from the viewpoint of being capable of improving the dispersibility of the fluorine resin (C) and the inorganic filler (D) in a solution, and thus being capable of suppressing occurrence of aggregates in and deformation after a heat treatment of the resultant film.

### <Filler>

Known fillers, additives and the like other than the fluorine resin (C) and the inorganic filler (D) may be included in the liquid crystal polyester resin composition of the present invention as long as the effects of the present invention are not impaired.

As the fillers other than the fluorine resin (C) and the inorganic filler (D), specific examples of fibrous fillers or whisker-like fillers include PAN-based or pitch-based carbon fibers, organic fibers such as aromatic polyamide fibers and liquid crystal polyester fibers, cellulose nanofibers and the like. Examples of powdery or granular fillers include graphite and the like. The above fibrous fillers or whisker-like fillers such as carbon fibers, organic fibers and cellulose nanofibers may be pulverized to make powdery or granular fillers. The surface of the above fillers may be treated with a known coupling agent (for example, a silane-based coupling agent, a titanate-based coupling agent, etc.) and other surface treatment agents. Two or more kinds of fillers may be used in combination.

It is possible to mix, as additives, for example, known additives selected from antioxidants, heat stabilizers (for example, hindered phenol, hydroquinone, phosphite, thioethers and substitutes thereof), UV absorbers (for example, resorcinol, salicylate), anti-colorants such as phosphites and hypophosphites, lubricants and mold release agents (such as montanic acid and metal salts thereof, esters thereof, half esters thereof, stearyl alcohols, stearamides and polyethylene waxes), colorants including dyes or pigments, carbon black as conductive agents or colorants, crystal nucleating agents, plasticizers, flame retardants (bromine-based flame retardants, phosphorus-based flame retardants, red phosphorus, silicone-based flame retardants and the like), flame retardant aids and antistatic agents.

### <Liquid Crystal Polyester Resin Film and Laminate>

The liquid crystal polyester resin composition of the present invention can be used as a raw material for producing a liquid crystal polyester resin film and a laminate.

The liquid crystal polyester resin film of the present invention is a liquid crystal polyester resin film including 5 to 300 parts by weight of the fluorine resin (C) and 1 to 300 parts by weight of the inorganic filler (D) relative to 100 parts by weight of the liquid crystal polyester resin (A). The liquid crystal polyester resin film of the present invention is preferably obtained from the liquid crystal polyester resin composition of the present invention. The liquid crystal polyester resin film can be produced, for example, by a method in which the liquid crystal polyester resin composition of the present invention is applied onto a support, and the solvent (B) is removed to obtain a laminate, and then the support is removed from the laminate thus obtained.

The thickness of the liquid crystal polyester resin film of the present invention is preferably 5 µm or more, more preferably 10 µm or more, and still more preferably 20 µm or more, from the viewpoint that the particle size of the fluorine resin (C) and the inorganic filler (D) is smaller than the thickness. Meanwhile, the thickness is preferably 200 µm or less, more preferably 150 µm or less, and still more preferably 100 µm or less, from the viewpoint of being capable of suppressing occurrence of aggregates in and deformation after a heat treatment of the resultant film. The thickness of the liquid crystal polyester resin film can be obtained by measuring thicknesses at optional five points using a micrometer, and calculating the mean value thereof.

The laminate of the present invention is a laminate comprising a support and a resin layer that are mutually laminated, the support being laminated on at least one surface of the resin layer obtained from the liquid crystal polyester resin composition of the present invention. The laminate can be produced, for example, by the following methods (I) to (IV).
(I) A method in which the liquid crystal polyester resin composition of the present invention is applied onto a support, and then the solvent is removed.
(II) A method in which the film of the present invention is attached to a support by thermal bonding.
(III) A method in which the film of the present invention and a support are attached with an adhesive.
(IV) A method in which a support is formed on the film of the present invention by vapor deposition.

From the viewpoint that a resin layer having a uniform thickness can be easily formed, the method (I) is preferable.

The support used in the method for producing a liquid crystal polyester resin film and the methods (I) to (IV) for producing a laminate is not particularly limited and is selected from a metal, a glass, a polymer and the like. In the supports used in the method for producing a liquid crystal polyester resin film and the method (I), it is important that they are resistant to the solvent used. The support may be a simple substance such as a metal, a glass or a polymer, or a composite material. Examples of the polymer film include a polyimide film, a liquid crystal polyester film, a cycloolefin polymer film and a polypropylene film each having insulation properties. Examples of the metal used when the support is a metal foil in the methods (I) to (III) and when the support is a metal layer in the method (IV) include gold, silver, copper, nickel, aluminum and the like. Copper is preferable for flexible printed wiring board applications. When a metal foil is used as the support, the liquid crystal polyester film is not separated and may be used as a metal-clad laminate for a printed wiring board.

The method for producing a laminate by the method (I) will be described below.

Examples of the method for applying the liquid crystal polyester resin composition onto the support include various means such as a roller coating method, a dip coating method, a spray coater method, a spinner coating method, a curtain coating method, a slot coating method and a screen printing method. Using these means, the liquid crystal polyester resin composition is cast flatly and uniformly on a support to form a coating film.

Subsequently, a liquid crystal polyester resin layer is formed on a surface of the support by removing the solvent in the coating film. The method for removing the solvent is preferably performed by evaporation of the solvent. Examples of the method for evaporating the solvent include methods such as heating, depressurization and ventilation. From the viewpoint of suppressing rapid evaporation of the solvent and being capable of obtaining a film free from cracks and has a uniform thickness, it is preferable to remove the solvent by heating. The heating temperature is not particularly limited as long as the solvent volatilizes, but the temperature is preferably lower than the boiling point of the solvent, from the viewpoint of suppressing rapid evaporation of the solvent and being capable of suppressing occurrence of aggregates in and deformation after a heat treatment of the resultant film. Therefore, it is preferable to heat at the temperature higher than room temperature and lower than the boiling point of the solvent.

After forming the laminate in this way, a heat treatment may be performed as necessary. The method of the heat treatment is not particularly limited, and the heat treatment can be performed using an apparatus such as a hot air oven, a decompression oven or a hot plate. The heat treatment may be performed under atmospheric pressure, or under pressure or reduced pressure as long as the support and the liquid crystal polyester resin do not deteriorate. From the viewpoint of suppressing deterioration of the liquid crystal polyester resin, it is preferable to perform the heat treatment in an atmosphere of inert gas. For example, it is preferable to perform the heat treatment raising the temperature from the range of the melting point - 50°C to the melting point - 5°C to the range of the melting point + 5°C to the melting point + 50°C of the liquid crystal polyester resin over 1 to 50 hours in a nitrogen stream.

Examples of the structure of the laminate obtained in this manner includes a two-layered structure of a film and a support, a three-layered structure in which a support is laminated on both surfaces of the film, a three-layered structure in which a film is laminated on both surfaces of the support, and a multi-layered structure in which four or more layers of a film and a support are alternately laminated.

The liquid crystal polyester resin film or laminate obtained by the above method can be used for, for example, electric/electronic components represented by various computers, OA equipment and AV equipment, and circuit boards such as flexible printed wiring boards and rigid printed wiring boards on which electric/electronic components are mounted; semiconductor package used for in-vehicle semiconductors, industrial semiconductors and the like; base materials of a transparent conductive film, base materials of a polarizing film, packaging films for various cooked foods and microwave heating, films for electromagnetic wave shielding, antibacterial films, gas separation films and the like. Since it is possible to obtain a film free from cracks and has a uniform thickness, the laminate is suitably used for circuit boards such as flexible printed wiring boards and rigid printed wiring boards, and semiconductor packages, which use a laminate characterized in that a plurality of laminates are laminated.

### [Examples]

Hereinafter, the present invention will be described by way of Examples, but the present invention is not limited to Examples. In Examples, the composition and evaluation of properties of the liquid crystal polyester resin (A) were measured by the following methods.

### (1) Composition Analysis of Liquid Crystalline Polyester Resin (A)

Composition analysis of the liquid crystalline polyester resin was performed by ¹H-nuclear magnetic resonance spectroscopy (¹H-NMR). After weighing 50 mg of the liquid crystalline polyester resin in an NMR sample tube, the liquid crystalline polyester resin was dissolved in 800 µL of a solvent (pentafluorophenol/1,1,2,2,-tetrachloroethane-d₂ = 65/35 (weight ratio) mixed solvent), and then ¹H-NMR measurement was performed under conditions of the spectral frequency of 500 MHz and the temperature of 80°C using UNITY INOVA 500 NMR spectrometer (manufactured by Varian, Inc.). The composition of the liquid crystalline polyester resin was analyzed from a ratio of peak areas derived from the respective structural units observed in the spectral range of about 7 to 9.5 ppm.

### (2) Melting Point (Tm) of Liquid Crystal Polyester Resin (A)

Measurement was performed using a differential scanning calorimeter DSC-7 (manufactured by PerkinElmer, Inc.). After observation of an endothermic peak temperature (Tm₁) observed when heating under temperature rising conditions of 20°C/minute from room temperature, the liquid crystal polyester resin was maintained at the temperature of Tm₁ + 20°C for 5 minutes, followed by observation of the endothermic peak temperature (Tm₂) observed when the temperature is once fallen to room temperature under temperature falling conditions of 20°C/minute and then raised again under temperature rising conditions of 20°C/minute. In the present invention, the endothermic peak temperature (Tm₂) is defined as the melting point (Tm).

### (3) Melt Viscosity of Liquid Crystal Polyester Resin (A)

Using a Koka-type flow tester CFT-500D (orifice: 0.5ϕ × 10 mm) (manufactured by Shimadzu Corporation), the melt viscosity of the liquid crystal polyester resin was measured under conditions of Tm + 10°C, or 280°C when Tm is less than 270°C, and the shear rate of 1,000/second.

### [Production Example 1]

In a 5 L reaction vessel equipped with a stirring blade and a distillation tube, 994 parts by weight of p-hydroxybenzoic acid, 126 parts by weight of 4,4'-dihydroxybiphenyl, 112 parts by weight of terephthalic acid, 216 parts by weight of polyethylene terephthalate having an intrinsic viscosity of about 0.6 dl/g, and 960 parts by weight (1.10 equivalents of the total of phenolic hydroxyl groups) of acetic anhydride were charged and, after reacting at 145°C for 80 minutes while stirring in a nitrogen gas atmosphere, the temperature was raised from 145°C to 320°C over 4 hours. Thereafter, the polymerization temperature was maintained at 320°C and the inside of the reaction vessel was depressurized to 1.0 mmHg (133 Pa) over 1.0 hour, and after continuously reacting further, the polymerization was completed when the torque required for stirring reached 20 kg·cm. Then, the inside of the reaction vessel was pressurized to 1.0 kg/cm² (0.1 MPa) and the polymer was extruded into strands through a spinneret with one circular outlet having a diameter of 10 mm, followed by pelletization using a cutter to obtain a liquid crystal polyester resin (A-1).

When the composition of this liquid crystal polyester resin (A-1) was analyzed, the structural unit derived from p-hydroxybenzoic acid was 66.7 mol%, the structural unit derived from 4,4'-dihydroxybiphenyl was 6.3 mol%, the structural unit derived from terephthalic acid was 16.7 mol%, and the structural unit derived from ethylene glycol was 10.4 mol%. Tm was 313°C, and the melt viscosity was 13 Pa·s.

### [Production Example 2]

In a 5 L reaction vessel equipped with a stirring blade and a distillation tube, 901 parts by weight of p-hydroxybenzoic acid, 126 parts by weight of 4,4'-dihydroxybiphenyl, 112 parts by weight of terephthalic acid, 346 parts by weight of polyethylene terephthalate having an intrinsic viscosity of about 0.6 dl/g, and 884 parts by weight (1.10 equivalents of the total of phenolic hydroxyl groups) of acetic anhydride were charged and, after reacting at 145°C for 85 minutes while stirring in a nitrogen gas atmosphere, the temperature was raised from 145°C to 290°C over 4 hours. Thereafter, the polymerization temperature was maintained at 290°C and the inside of the reaction vessel was depressurized to 1.0 mmHg (133 Pa) over 1.0 hour, and after continuously reacting further, the polymerization was completed when the torque required for stirring reached 20 kg·cm. Then, the inside of the reaction vessel was pressurized to 1.0 kg/cm² (0.1 MPa) and the polymer was extruded into strands through a spinneret with one circular outlet having a diameter of 10 mm, followed by pelletization using a cutter to obtain a liquid crystal polyester resin (A-2).

When the composition of this liquid crystal polyester resin (A-2) was analyzed, the structural unit derived from p-hydroxybenzoic acid was 56.9 mol%, the structural unit derived from 4,4'-dihydroxybiphenyl was 5.9 mol%, the structural unit derived from terephthalic acid was 21.6 mol%, and the structural unit derived from ethylene glycol was 15.7 mol%. Tm was 263°C, and the melt viscosity was 13 Pa·s.

### [Production Example 3]

In a 5 L reaction vessel equipped with a stirring blade and a distillation tube, 870 parts by weight of p-hydroxybenzoic acid, 352 parts by weight of 4,4'-dihydroxybiphenyl, 89 parts by weight of hydroquinone, 292 parts by weight of terephthalic acid, 157 parts by weight of isophthalic acid, and 1314 parts by weight (1.10 equivalents of the total of phenolic hydroxyl groups) of acetic anhydride were charged and, after reacting at 145°C for 90 minutes while stirring in a nitrogen gas atmosphere, the temperature was raised from 145°C to 330°C over 4 hours. Thereafter, the polymerization temperature was maintained at 330°C and the inside of the reaction vessel was depressurized to 1.0 mmHg (133 Pa) over 1.0 hour, and after continuously reacting further, the polymerization was completed when the torque reached 10 kg·cm. Then, the inside of the reaction vessel was pressurized to 1.0 kg/cm² (0.1 MPa) and the polymer was extruded into strands through a spinneret with one circular outlet having a diameter of 10 mm, followed by pelletization using a cutter to obtain a liquid crystal polyester resin (A-3).

When the composition of this liquid crystal polyester resin (A-3) was analyzed, the structural unit derived from p-hydroxybenzoic acid was 53.8 mol%, the structural unit derived from 4,4'-dihydroxybiphenyl was 16.2 mol%, the structural unit derived from hydroquinone was 6.9%, the structural unit derived from terephthalic acid was 15.0 mol%, and the structural unit derived from isophthalic acid was 8.1 mol%. Tm was 310°C, and the melt viscosity was 13 Pa·s.

### [Production Example 4]

In a 5 L reaction vessel equipped with a stirring blade and a distillation tube, 528 parts by weight of p-hydroxybenzoic acid, 126 parts by weight of 4,4'-dihydroxybiphenyl, 112 parts by weight of terephthalic acid, 865 parts by weight of polyethylene terephthalate having an intrinsic viscosity of about 0.6 dl/g, and 581 parts by weight (1.10 equivalents of the total of phenolic hydroxyl groups) of acetic anhydride were charged and, after reacting at 145°C for 90 minutes while stirring in a nitrogen gas atmosphere, the temperature was raised from 145°C to 290°C over 4 hours. Thereafter, the polymerization temperature was maintained at 290°C and the inside of the reaction vessel was depressurized to 1.0 mmHg (133 Pa) over 1.0 hour, and after continuously reacting further, the polymerization was completed when the torque required for stirring reached 20 kg·cm. Then, the inside of the reaction vessel was pressurized to 1.0 kg/cm² (0.1 MPa) and the polymer was extruded into strands through a spinneret with one circular outlet having a diameter of 10 mm, followed by pelletization using a cutter to obtain a liquid crystal polyester resin (A-4) .

When the composition of this liquid crystal polyester resin (A-4) was analyzed, the structural unit derived from p-hydroxybenzoic acid was 27.0 mol%, the structural unit derived from 4,4'-dihydroxybiphenyl was 4.8 mol%, the structural unit derived from terephthalic acid was 36.5 mol%, and the structural unit derived from ethylene glycol was 31.7 mol%. Tm was 210°C, and the melt viscosity was 13 Pa·s.

### Examples 1 to 14, Comparative Examples 1 to 5

The liquid crystal polyester resin (A) was crushed into powders using a coarse crusher and mixed with a solvent (B1) in the amount shown in Table 1, followed by heating to 130°C to completely dissolve each liquid crystal polyester resin. Thereafter, the solution was cooled to 50°C, mixed with a solvent (B2) in the amount shown in Table 1, followed by stirring and defoam to obtain a brown transparent solution. Subsequently, a fluorine resin (C) and an inorganic filler (D) were mixed in each amount shown in Table 1, followed by cooling to 25°C to obtain a liquid crystal polyester resin composition, and then the following evaluations (4) and (5) were performed.

Regarding Examples 6 and 9 and Comparative Examples 3 and 4, since the liquid crystal polyester resin was solidified at 25°C, it was heated to 50°C to be liquefied, and then the following evaluations (4) and (5) were performed.

The phenol (B1) in which three or more hydrogen atoms bonded to the benzene ring are substituted with fluorine atoms, the protic solvent (B2) having a melting point of 30°C or lower, the fluorine resin (C) and the inorganic filler (D) used in each of Examples and Comparative Examples are as shown below. Regarding the melting point, the boiling point and the acid dissociation constant (pKa), literature values were cited.
(B1-1) Pentafluorophenol (melting point of 34°C, boiling point of 143°C, pKa of 5.5)
(B2-1) o-Chlorophenol (melting point of 8°C, boiling point of 175°C, pKa of 8.5)
(B2-2) Hexafluoroisopropanol (melting point of -4°C, boiling point of 59°C, pKa of 9.3)
(C-1) Polytetrafluoroethylene micropowder ("Dyneon" TF 9207Z manufactured by 3M Company, mean particle size of 4 µm)
(D-1) Plate-like boron nitride (WU-BN-002 manufactured by LONG TON Co., Ltd., mean particle size of 0.6 µm)
(D-2) Clay (S-BEN NX manufactured by HOJUN Co., Ltd., mean particle size of 2 µm)
(D-3) Aluminum oxide(SPECTRAL51 manufactured by Cabot Corporation, mean particle size of 5 µm)
(D-4) Mesoporous silica (MCM-48 manufactured by Sigma-Aldrich Co. LLC, mean particle size of 15 µm).

### (4) Evaluation of Aggregates of Fluorine Resin (C) and Inorganic Filler (D)

The thus obtained liquid crystal polyester resin composition was applied onto an aluminum foil (12 µm in thickness) using a film applicator, heated to 55°C on a hot plate to remove a part of the solvent and heated to a temperature of 80°C to remove the remaining solvent, and then a heat treatment was further performed at a temperature of 100°C for one hour to fabricate a laminate of a liquid crystal polyester resin film of 200 mm × 300 mm (average thickness of 50 µm) and the aluminum foil. The thus obtained liquid crystal polyester resin film was peeled off from the aluminum foil, and regarding the thus obtained film, the number of aggregates of 100 µm or more observed at any 50 points in the field with a magnification of 150 times using a digital microscope VHX-500F manufactured by Shimadzu Corporation was evaluated. The smaller the number of aggregates is, the more excellent dispersibility of the fluorine resin (C) and the inorganic filler (D) the film has.

### (5) Evaluation of Deformation after Heat Treatment

In the same manner as in the above (4), 30 laminates each of the liquid crystal polyester resin film and the aluminum foil were fabricated, and when the melting point of the liquid crystal polyester resin is 260°C or more, a heat treatment was performed for 3 hours at 260°C, and then a heat treatment was further performed at 300°C for 1 minute. When the melting point of the liquid crystal polyester resin is less than 260°C, a heat treatment was performed for 3 hours at a temperature of the melting point of the liquid crystal polyester resin -10°C. Regarding the laminate after the heat treatment, the number of occurrences of deformation such as wrinkles, cracks or curls was evaluated. The smaller the number of occurrences of deformation is, the more excellent the film is in which deformation does not occur after a heat treatment.

Table 1 shows the evaluation results of the measurement by the methods mentioned in the above (1) to (3) regarding the pellets obtained in Production Examples 1 to 4, and the evaluation results of the measurement of each property by the methods mentioned in the above (4) and (5) regarding Examples 1 to 10 and Comparative Examples 1 to 4.

**[Table 1]**

| | Liquid crystal polyester resin (A) | Solvent (B) | | Fluorine resin (C) | Inorganic filler (D) | Weight ratio (C/D) of fluorine resin (C) to inorganic filler (D) | Aggregates of fluorine resin (C) and inorganic filler (D) (aggregate) | Deformation after heat treatment (laminate) |
|---|---|---|---|---|---|---|---|---|
| | | Solvent (B1) | Solvent (B2) | | | | | |
| | (Parts by weight) | (Parts by weight) | (Parts by weight) | (Parts by weight) | (Parts by weight) | | | |
| Example 1 | A-1(100) | B1-1(900) | B2-2(500) | C-1(130) | D-1(40) | 3.25 | 0 | 0 |
| Example 2 | A-2(100) | B1-1(900) | B2-2(500) | C-1(130) | D-1(40) | 3.25 | 0 | 0 |
| Example 3 | A-2(100) | B1-1(900) | B2-2(500) | C-1(130) | D-2(40) | 3.25 | 1 | 0 |
| Example 4 | A-2(100) | B1-1(900) | B2-2(500) | C-1(130) | D-3(40) | 3.25 | 3 | 2 |
| Example 5 | A-2(100) | B1-1(900) | B2-2(500) | C-1(130) | D-4(40) | 3.25 | 3 | 2 |
| Example 6 | A-2(100) | B1-1(900) | B2-1(500) | C-1(130) | D-1(40) | 3.25 | 1 | 0 |
| Example 7 | A-2(100) | B1-1(900) | B2-2(500) | C-1(160) | D-1(20) | 8 | 0 | 1 |
| Example 8 | A-2(100) | B1-1(900) | B2-2(500) | C-1(30) | D-1(150) | 0.2 | 4 | 1 |
| Example 9 | A-3(100) | B1-1(900) | B2-2(500) | C-1(130) | D-1(40) | 3.25 | 2 | 2 |
| Example 10 | A-4(100) | B1-1(900) | B2-2(500) | C-1(130) | D-1(40) | 3.25 | 0 | 0 |
| Example 11 | A-2(100) | B1-1(900) | B2-2(500) | C-1(5) | D-1(40) | 0.13 | 5 | 5 |
| Example 12 | A-2(100) | B1-1(900) | B2-2(500) | C-1(13) | D-1(4) | 3.25 | 0 | 5 |
| Example 13 | A-2(100) | B1-1(900) | B2-2(500) | C-1(130) | D-1(280) | 0.46 | 5 | 3 |
| Example 14 | A-2(100) | B1-1(900) | B2-2(500) | C-1(280) | D-1(40) | 7 | 4 | 4 |
| Example 15 | A-2(100) | B1-1(900) | B2-2(500) | C-1(80) | D-1(40) | 2 | 0 | 0 |
| Example 16 | A-2(100) | B1-1(900) | B2-2(500) | C-1(130) | D-1(30) | 4.33 | 0 | 0 |
| Example 17 | A-2(100) | B1-1(400) | B2-2(80) | C-1(130) | D-1(40) | 3.25 | 2 | 4 |
| Example 18 | A-2(100) | B1-1(2700) | B2-2(1500) | C-1(130) | D-1(40) | 3.25 | 2 | 4 |
| Comparative Example 1 | A-2(100) | B1-1(900) | B2-2(500) | C-1(130) | - | - | 32 | 27 |
| Comparative Example 2 | A-2(100) | B1-1(900) | B2-2(500) | - | D-1(40) | 0 | 10 | 15 |
| Comparative Example 3 | A-2(100) | B1-1(900) | B2-2(500) | C-1(330) | D-1(20) | 16.5 | 48 | 29 |
| Comparative Example 4 | A-2(100) | B1-1(900) | B2-2(500) | C-1(30) | D-1(330) | 0.09 | 42 | 26 |
| Comparative Example 5 | A-2(100) | B1-1(900) | B2-2(500) | C-1(2) | D-1(40) | 0.05 | 9 | 14 |

As is apparent from the results in Table 1, it is possible to obtain a film in which occurrence of aggregates and deformation after a heat treatment are suppressed by using the liquid crystal polyester resin composition of the present invention that is used in combination with the fluorine resin (C) and the inorganic filler (D).

### [Industrial Applicability]

According to the liquid crystal polyester resin composition of the present invention, it is possible to obtain a film in which occurrence of aggregates and deformation after a heat treatment are suppressed. The liquid crystal polyester resin film and the laminate of the present invention are suitably used for circuit boards such as flexible printed wiring boards and rigid printed wiring boards, and semiconductor packages, which use a laminate characterized in that a plurality of resin films or laminates are laminated.

## Claims

1. A liquid crystal polyester resin composition comprising a liquid crystal polyester resin (A), a solvent (B) in which the liquid crystal polyester resin (A) is dissolved, a fluorine resin (C) and an inorganic filler (D), wherein 100 to 5,000 parts by weight of the solvent (B), 5 to 300 parts by weight of the fluorine resin (C) and 1 to 300 parts by weight of the inorganic filler (D) are included relative to 100 parts by weight of the liquid crystal polyester resin (A) .

2. The liquid crystal polyester resin composition according to claim 1, wherein the weight ratio (C/D) of the fluorine resin (C) to the inorganic filler (D) is 0.1 to 10.

3. The liquid crystal polyester resin composition according to claim 1 or 2, which includes, as the solvent (B), 50 to 3,000 parts by weight of a phenol (B1) in which three or more hydrogen atoms bonded to the benzene ring are substituted with fluorine atoms, and 1 to 2,000 parts by weight of a protic solvent (B2) having a melting point of 30°C or lower and an acid dissociation constant (pKa) of 4 to 12, relative to 100 parts by weight of the liquid crystal polyester resin.

4. The liquid crystal polyester resin composition according to any one of claims 1 to 3, wherein the fluorine resin (C) is polytetrafluoroethylene.

5. The liquid crystal polyester resin composition according to any one of claims 1 to 4, wherein the mean particle size of the fluorine resin (C) is 0.1 to 20 µm.

6. The liquid crystal polyester resin composition according to any one of claims 1 to 5, wherein the mean particle size of the inorganic filler (D) is 0.1 to 20 µm.

7. The liquid crystal polyester resin composition according to any one of claims 1 to 6, wherein the liquid crystal polyester resin (A) includes 3 to 40 mol% of a structural unit derived from an aliphatic diol having 2 to 4 carbon atoms relative to 100 mol% of the total structural unit of the liquid crystal polyester resin.

8. A liquid crystal polyester resin film comprising a liquid crystal polyester resin (A), a fluorine resin (C) and an inorganic filler (D), wherein 5 to 300 parts by weight of the fluorine resin (C) and 1 to 300 parts by weight of the inorganic filler (D) are included relative to 100 parts by weight of the liquid crystal polyester resin (A).

9. A liquid crystal polyester resin film obtained from the liquid crystal polyester resin composition according to any one of claims 1 to 7.

10. A laminate comprising a support and a resin layer that are mutually laminated, wherein the support is laminated on at least one surface of the resin layer obtained from the liquid crystal polyester resin composition according to any one of claims 1 to 7.

11. A method for producing a laminate, which comprises applying the liquid crystal polyester resin composition according to any one of claims 1 to 7 onto a support and removing the solvent (B).

12. A method for producing a liquid crystal polyester resin film, which comprises removing the support from the laminate obtained by the method according to claim 11 to obtain a liquid crystal polyester resin film.
